(19) Europäisches Patentamt
European Patent Office
Office européen des brevets

(11) **EP 4 254 767 A1**

(12) **EUROPÄISCHE PATENTANMELDUNG**

(43) Veröffentlichungstag:
04.10.2023  Patentblatt 2023/40

(21) Anmeldenummer: 22020200.6

(22) Anmeldetag: **03.05.2022**

(51) Internationale Patentklassifikation (IPC):
**H02M 7/483** (2007.01)    **H02M 7/49** (2007.01)
**H02M 7/5395** (2006.01)    **H02M 1/00** (2006.01)

(52) Gemeinsame Patentklassifikation (CPC):
**H02M 7/49; H02M 1/0025; H02M 1/0043;**
**H02M 7/4835; H02M 7/5395;** H02M 7/4833

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **30.03.2022  DE 102022107483**

(71) Anmelder: **Dr. Ing. h.c. F. Porsche
Aktiengesellschaft
70435 Stuttgart (DE)**

(72) Erfinder:
• **Götz, Stefan**
  **85659 Forstern (DE)**
• **Kacetl, Tomas**
  **67663 Kaiserslautern (DE)**
• **Kacetl, Jan**
  **67663 Kaiserslautern (DE)**
• **Tashakor, Nima**
  **67655 Kaiserstlautern (DE)**

Bemerkungen:
Geänderte Patentansprüche gemäss Regel 137(2) EPÜ.

(54) **VERFAHREN UND SYSTEM ZUM MODIFIZIEREN VON TRÄGERSIGNALEN BEI EINER PHASENVERSCHOBENEN PULSWEITENMODULATION**

(57)    Die Erfindung betrifft ein Verfahren zu einer Ansteuerung eines modularen Multilevelkonverters, wobei der modulare Multilevelkonverter eine Vielzahl von Modulen mit mindestens einer Energiespeichereinheit und einer Mehrzahl steuerbarer Schalter umfasst, wobei der modulare Multilevelkonverter mittels pulsweitenmodulierter Steuersignale angesteuert wird, wobei ein jeweiliges Steuersignal basierend auf einem jeweiligen Trägersignal (701, 702, 703), welches eine auf das jeweilige Modul bezogene Phasenverschiebung aufweist, und basierend auf mindestens einem Referenzsignal (115) erzeugt wird, wobei durch einen auf einem Größenvergleich basierenden Vergleich eines Signalverlaufs des jeweiligen Trägersignals mit dem mindestens einen Referenzsignal eine Zuschaltzeit der mindestens einen Energiespeichereinheit des jeweiligen Moduls zu einem Laststrom getriggert wird, und wobei der Signalverlauf (700) des jeweiligen Trägersignals durch mindestens eine Veränderung innerhalb folgender drei Freiheitsgrade modifiziert wird, nämlich indem das jeweilige Trägersignal (701, 702) gegenüber dem mindestens einen Referenzsignal vertikal verschoben wird und/oder Signalflanken des jeweiligen Trägersignals (702) konvex gewölbt werden und/oder Signalflanken des jeweiligen Trägersignals (701, 703) konkav gewölbt werden. Ferner wird ein entsprechendes Steuergerät sowie ein modularer Multilevelkonverter mit diesem Steuergerät beansprucht.

Fig. 7

EP 4 254 767 A1

**Beschreibung**

Die vorliegende Erfindung betrifft ein Verfahren zu einer phasenverschobenen Pulsweitenmodulation eines Trägersignals zur Steuerung von Modulen eines modularen Multilevelkonverters. Ferner wird ein entsprechendes Steuergerät und ein modularer Multilevelkonverter mit diesem Steuergerät beansprucht.

Modulare oder kaskadierte Umrichter sind sowohl für Wechselstrom- wie Gleichstromsysteme von stark zunehmender Bedeutung. Im Gegensatz zu traditioneller Leistungselektronik, welche mit wenigen Leistungsschaltern eine Ein- oder Ausgangsspannung zwischen wenigen Niveaus umschaltet, um im Mittel eine gewünschte Klemmspannung zu erlangen, ermöglichen modulare Multilevelkonverter; insbesondere der sog. klassische MMC und der MMSPC, eine Spannungsausgabe in sehr feinen Stufen. Dies wird durch eine dynamisch wechselbare elektrische Konfiguration von in Modulen angeordneten Energiespeichern, wie bspw. Kondensatoren oder Batterien, mit in den Modulen befindlichen elektrischen oder elektronischen Schaltern ermöglicht. Dabei nehmen die Module bestimmte Modulschaltzustände an, welche bspw. serielle oder parallele Verschaltung ihrer Energiespeicher mit denen anderer Module umfassen. Gegebenenfalls ist auch ein Bypass eines jeweiligen Energiespeichers möglich.

Eine einfache Möglichkeit einer Steuerung von Modulen des Umrichters bietet eine phasenverschobene Modulation von Trägersignalen, im Englischen "phase-shifted carrier (PSC) modulation" genannt. Man unterscheidet eine konventionelle PSC-Modulation und eine unkonventionelle PSC-Modulation. Die konventionelle PSC-Modulation setzt ideale und vollständig identische Module voraus, d. h. jedes Modul weist kein Widerstandselement auf und zeigt gleiche Spannung und Ladung. Die unkonventionelle PSC-Modulation benötigt hingegen einen beträchtlichen Rechenaufwand oder vernachlässigt gleich ganz einen dynamischen Betrieb des Systems.

Die Druckschrift DE 10 2013 201 538 A1 beschreibt ein Verfahren zur Ansteuerung eines Umrichters mittels pulsweitenmodulierter Steuersignale, Die Trägersignalperioden werden basierend auf einem pseudozufälligen Periodenraster angepasst.

In der US-amerikanischen Druckschrift US 2012/0326507 A1 offenbart eine Leistungswandlungsvorrichtung mit mehreren Konvertern bzw. Invertern und mehreren Mikroprozessoren zur Steuerung der Konverter. Die Mikroprozessoren vergleichen Phasenspannungen der Konverter mit dreieckwellenförmigen Trägersignalen.

Die Druckschrift EP 3 694 099 A1 erörtert ein Verfahren zur Ansteuerung von parallelen Wechselrichtern eines Stromnetzes, wobei eine Trägersignalfrequenz angepasst wird. Ein Datenprozessor ist dazu konfiguriert, eine beobachtete Phasendifferenz zwischen einem Referenzphasenpunkt und einem beobachteten Positionsabtastwert eines Pulsweitenmodulations-Trägersignals der Wechselrichter zu bestimmen.

Phasenverschobene und sich dabei überlappende, aber ansonsten identische Trägersignale stellen eine der meist genutzten Modulationsmethoden dar, um Schaltpulse für alle Arten von modularen, versetzten oder kaskadierten Umrichtern zu erzeugen und zu steuern. Zwar garantieren gleichmäßig phasenverschobene Trägersignale mit individuell gesetzten Referenzsignalen eine Gleichverteilung eines Entladens oder eines Ladens über alle Module, insbesondere wenn die Trägersignale als Sägezahn bzw. Dreiecksform ausgebildet sind, zeigen aber Nachteile für eine Ansteuerung eines Ladungsausgleichs zwischen Modulen. Auch können unterschiedliche interne Widerstände bei wechselnder Last, welche zu unterschiedlichen Ausgabespannungen führt, nicht korrigiert werden.

Vor diesem Hintergrund ist es eine Aufgabe der vorliegenden Erfindung, ein Verfahren zur Steuerung von Modulen eines modularen Multilevelkonverters zur Verfügung zu stellen, welches mittels geeigneter Modulation phasenverschobener Trägersignale einen aktiven Ladungsausgleich zwischen einzelnen Modulen in Bezug auf ihren Ladungszustand und einen jeweilig von einer Last angefragten fließenden Strom ermöglicht. Auch unterschiedliche parasitäre Impedanzen der Module oder ein Gesamtscheinwiderstand des Umrichters sollen berücksichtigt werden können. Ferner soll ein System bereitgestellt werden, auf welchem das Verfahren ausführbar ist.

Zur Lösung der voranstehend genannten Aufgabe wird ein Verfahren zu einer Ansteuerung eines modularen Multilevelkonverters vorgeschlagen, wobei der modulare Multilevelkonverter eine Vielzahl von Modulen mit mindestens einer Energiespeichereinheit und einer Mehrzahl steuerbarer Schalter umfasst. Der modulare Multilevelkonverter wird mittels pulsweitenmodulierter Steuersignale angesteuert, wobei ein jeweiliges Steuersignal basierend auf einem jeweiligen Trägersignal, welches eine auf das jeweilige Modul bezogene Phasenverschiebung aufweist, und basierend auf mindestens einem Referenzsignal erzeugt wird. Durch einen auf einem Größenvergleich basierenden Vergleich eines Signalverlaufs des jeweiligen Trägersignals mit dem mindestens einen Referenzsignal wird eine Zuschaltzeit des mindestens einen Energiespeichers des jeweiligen Moduls zu einem Laststrom getriggert. Der Signalverlauf des jeweiligen Trägersignals wird durch mindestens eine Veränderung innerhalb folgender drei Freiheitsgrade modifiziert, nämlich indem das jeweilige Trägersignal gegenüber dem mindestens einen Referenzsignal vertikal verschoben wird und/oder Signalflanken des jeweiligen Trägersignals konvex gewölbt werden und/oder Signalflanken des jeweiligen Trägersignals konkav gewölbt werden.

Die Begriffsbildung "konvexe" Wölbung bedeutet, dass eine konvex gewölbte Signalflanke gegenüber ihrer ungewölbten Ausgangsform einen zeitlichen Verlauf annimmt, bei dem Verbindungsstrecken zweier Punkte auf der konvex gewölbten Signalflanke immer unterhalb des zeitlichen Verlaufs der konvex gewölbten Signalflanke liegen. In diesem Sinne ist die konvex gewölbte Signalflanke gegenüber einer zwischen ihrer ungewölbten Ausgangsform und der Zeitachse gebildeten (Integral-)Fläche "nach außen" gewölbt, d. h. die Integralfläche wird erhöht.

Die Begriffsbildung "konkave" Wölbung bedeutet, dass eine konkav gewölbte Signalflanke gegenüber ihrer ungewölbten Ausgangsform einen zeitlichen Verlauf annimmt, bei dem Verbindungsstrecken zweier Punkte auf der konkav gewölbten Signalflanke immer oberhalb des zeitlichen Verlaufs der konkav gewölbten Signalflanke liegen. In diesem Sinne ist die konkav gewölbte Signalflanke gegenüber einer zwischen ihrer ungewölbten Ausgangsform und der Zeitachse gebildeten (Integral-)Fläche "nach innen" gewölbt. d. h. die Integralfläche wird erniedrigt.

Ausgangspunkt für die folgenden Betrachtungen sind phasenverschobene und sich dabei überlappende, aber ansonsten identische Trägersignale. Sind eine Anzahl von N Modulen bspw. in Reihe verschaltet als ein einzelner Strang des Multilevelkonverters angeordnet, so weist das Trägersignal des $i$-ten Moduls eine jeweilige Phasenverschiebung von $2*Pi*(i\text{-}1)/N$ auf. Weiterhin entspricht das mindestens eine Referenzsignal einem zunächst für alle Module bereitgestellten Modulationsreferenzsignal.

Die erfindungsgemäße Erweiterung von Freiheitsgraden bei der phasenverschobenen Modulation von Trägersignalen mit vertikalen Verschiebungen zwischen Trägersignal und Referenzsignal, und/oder konvexen oder konkaven Auswölbungen in Signalflanken jeweiliger Trägersignale, wird vorteilhaft in nachfolgend beschriebenen Ausführungsformen des erfindungsgemäßen Verfahrens eingesetzt, um

- Ladung und Temperatur unter den Modulen oder kaskadierten Umrichtern auszugleichen;
- eine negativen Auswirkung eines systeminternen Widerstandes auszugleichen;
- unterschiedliche Parameter elektronischer Bauelemente in den Modulen auszugleichen;
- durch Multifrequenz-Modulation mehrere Ausgabegrößen zu erzeugen;
- Trägersignalamplituden für Ladungs- und Temperaturausgleich von Modulen zu skalieren.

Die jeweiligen Ziele werden dabei innerhalb geringfügiger Auswirkung oder ohne Auswirkung auf eine Qualität der Ausgabespannung des Multilevelkonverters erreicht.

Im Folgenden sei ohne Beschränkung der Allgemeinheit vereinbart, dass die mindestens eine Energiespeichereinheit des jeweiligen Moduls zum Laststrom beiträgt, d. h. geladen oder entladen wird, falls ein Signalverlauf des jeweiligen Trägersignals, welches dem jeweiligen Modul zugeordnet ist, unterhalb des dem gleichen Modul zugeordneten Referenzsignals verläuft. Dementsprechend ist die mindestens eine Energiespeichereinheit des jeweiligen Moduls vom Laststrom getrennt, d. h. sie wird nicht geladen oder entladen, falls ein Signalverlauf des jeweiligen Trägersignals, welches dem jeweiligen Modul zugeordnet ist, oberhalb des dem gleichen Modul zugeordneten Referenzsignals verläuft. Daraus definiert sich ein Lastintervall, welches der Zuschaltzeit des mindestens einen Energiespeichers des jeweiligen Moduls an den Laststrom in einem als eine Reihenschaltung von Modulen ausgebildeten Strang während einer vollen Periodendauer des jeweiligen Trägersignals entspricht.

Die mindestens eine Energiespeichereinheit wird bspw. durch einen Kondensator, eine Batterie oder eine Brennstoffzelle gebildet. Die Steuerung des Multilevelkonverters wird dazu eingesetzt, von einer Zentralsteuerung angefragte Ausgabegrößen wie Spannung oder Strom bereitzustellen. Durch die erfindungsgemäßen Modifikationen des jeweiligen Trägersignals wird von der Steuerung ein Laden oder ein Entladen der Energiespeichereinheiten aller Module aktiv kontrolliert, sowie ein jeweiliger Ladungsausgleich zwischen den Energiespeichereinheiten gesteuert.

In einer vorteilhaften Ausführungsform des erfindungsgemäßen Verfahrens wird das jeweilige Trägersignal mit einem Sägezahnverlauf bzw. in einer Dreiecksform gebildet. Gemeinhin wird die Pulsweitenmodulation mit phasenverschobenen Trägersignalen besonders vorteilhaft mit Sägezahnverlauf gebildet, um bei gleichmäßiger Verteilung der phasenverschobenen Trägersignale das gleiche Lastintervall, d. h. eine gleiche Entladezeit oder Aufladezeit der Energiespeichereinheiten in allen Modulen zu gewährleisten. Denkbar ist bspw. auch eine Erzeugung von Trägersignalen in Sinusform, ohne dadurch die vorteilhaften Modifizierungsmöglichkeiten der Trägersignale durch das erfindungsgemäße Verfahren bzw. die im folgenden beschriebenen Ausführungsformen des erfindungsgemäßen Verfahrens einzuschränken.

In einer Ausführungsform des erfindungsgemäßen Verfahrens wird eine jeweilige Nulllage mindestens eines Trägersignals um einen jeweiligen Nulllage-Verschiebungswert $\delta_i^+$ vertikal nach oben verschoben, wobei gleichzeitig eine jeweilige Nulllage mindestens eines weiteren Trägersignals vertikal um einen jeweiligen Nulllage-Verschiebungs-wert $\delta_j^-$ nach unten verschoben wird. Dabei werden die jeweiligen Nulllage-Verschiebungswerte dergestalt gewählt, dass eine Summe über alle Nulllage-Verschiebungswerte einen Wert Null ergibt. Selbstredend betrifft diese Ausführungsform nur die jeweiligen Trägersignale, während die jeweiligen Referenzsignale hierbei unverändert bleiben. Bei einer Verschiebung eines jeweiligen Trägersignals nach oben/unten wird effektiv das jeweilige Lastintervall verringert/vergrößert, insbesondere im Vergleich mit allen anderen Modulen. Um die Nullsumme zu erreichen, kann bspw. auch eine unterschiedliche Zahl von Trägersignalen nach oben bzw. unten verschoben werden. So kann bspw. ein erstes Trägersignal um einen Nulllage-Verschiebungswert $\delta_1^+$ nach oben verschoben werden, und ein zweites Trägersignal und ein drittes Trägersignal jeweilig um weitere Nulllage-Verschiebungswerte $\delta_2^-$ und $\delta_3^-$ nach unten verschoben werden, solange erfindungsgemäß eine Summe von $\delta_2^-$ und $\delta_3^-$ betragsmäßig dem Nulllage-Verschiebungswert $\delta_1^+$ entspricht. Allgemein ist also zu beachten, dass für alle *i*-ten Module, deren jeweiliges Trägersignal um einen jeweiligen Nulllage-Verschiebungswert $\delta_i^+$ vertikal nach oben verschoben wird, und für alle *j*-ten Module, deren jeweiliges Trägersignal um einen jeweiligen Nulllage-Verschiebungswert $\delta_j^-$ nach unten verschoben wird, gilt:

$$\sum \delta_i^+ + \sum \delta_j^- = 0 \qquad . \qquad\qquad (1)$$

Durch Einhaltung von Gl. 1 wird gewährleistet, dass eine sich an einem Strangende einstellende Ausgabespannung des Multilevelkonverters unverändert bleibt. Damit ermöglicht diese Ausführungsform des erfindungsgemäßen Verfahrens vorteilhaft eine unterschiedliche Lastverteilung unter den jeweiligen Modulen, so dass bspw. Module mit vergleichsweise stärker entladenen Energiespeichern geschont (positiver Nulllage-Verschiebungswert), und Module mit vergleichsweise weniger entladenen Energiespeichern höher belastet (negativer Nulllage-Verschiebungswert) werden können.

In einer weiteren Ausführungsform des erfindungsgemäßen Verfahrens wird mindestens ein Referenzsignal einem jeweiligen *i*-ten Modul zugeordnet und gegenüber dem Modulationsreferenzsignal um einen jeweiligen Referenzsignal-Verschiebungswert $\vartheta_i^+$ vertikal nach oben verschoben. Gleichzeitig wird mindestens ein weiteres Referenzsignal einem weiteren *j*-ten Modul zugeordnet und gegenüber dem Modulationsreferenzsignal um einen jeweiligen Referenzsignal-Verschiebungswert $\vartheta_j^-$ vertikal nach unten verschoben. Dabei werden die jeweiligen Referenzsignal-Verschiebungswerte dergestalt gewählt, dass eine Summe über alle Referenzsignal-Verschiebungswerte einen Wert Null ergibt. Selbstredend betrifft diese weitere Ausführungsform nur die jeweiligen Referenzsignale, während die jeweiligen Trägersignale hierbei unverändert bleiben. Bei einer Verschiebung des jeweiligen Referenzsignals nach oben/unten wird effektiv das Lastintervall für das jeweilige Modul in einem als eine serielle Schaltung von Modulen ausgebildeten Strang, vergrößert/verringert, insbesondere im Vergleich mit allen anderen Modulen. Um die Nullsumme zu erreichen, kann bspw. auch eine unterschiedliche Zahl von jeweiligen Referenzsignalen nach oben bzw. unten verschoben werden. Allgemein ist zu beachten, dass für alle *i*-ten Module, deren jeweiliges Referenzsignal um einen jeweiligen Referenzsignal-Verschiebungswert $\vartheta_i^+$ vertikal nach oben verschoben wird, und für alle *j*-ten Module, deren jeweiliges Referenzsignal um einen jeweiligen Referenzsignal-Verschiebungswert $\vartheta_j^-$ vertikal nach unten verschoben wird, gilt:

$$\sum \vartheta_i^+ + \sum \vartheta_j^- = 0 \qquad . \qquad\qquad (2)$$

Durch Einhaltung von Gl. 2 wird gewährleistet, dass eine sich am Strangende einstellende Ausgabespannung des Multilevelkonverters unverändert bleibt. Damit ermöglicht diese weitere Ausführungsform des erfindungsgemäßen Verfahrens vorteilhaft eine unterschiedliche Lastverteilung unter den jeweiligen Modulen, so dass bspw. Module mit vergleichsweise stärker entladenen Energiespeichern geschont (negativer Referenzsignal-Verschiebungswert, d. h. Verschiebung des jeweiligen Referenzsignals nach unten), und Module mit vergleichsweise weniger entladenen Energiespeichern höher belastet (positiver Referenzsignal-Verschiebungswert, d. h. Verschiebung des jeweiligen Referenzsignals nach oben) werden können.

In einer noch weiteren Ausführungsform des erfindungsgemäßen Verfahrens werden Signalflanken mindestens eines Trägersignals basierend auf dem Laststrom verformt, wobei wahlweise eine jeweilige Signalflanke konvex bzw. nach außen (von einer Zeitachse weg) gewölbt wird, d. h. Werte der jeweiligen Signalflanke sind im Vergleich zur unverformten Signalflanke erhöht. Dadurch wird ein Strombeitrag eines jeweiligen von dem mindestens einen Trägersignal gesteuerten Moduls abgesenkt. Eine jeweilige Signalflanke wird wahlweise konkav bzw. nach innen gewölbt (zu einer Zeitachse hin), d. h. Werte der jeweiligen Signalflanke werden im Vergleich zur unverformten Signalflanke erniedrigt. Dadurch wird ein Strombeitrag eines jeweiligen von dem mindestens einen Trägersignal gesteuerten Moduls vergrößert. Die jeweilige konvexe oder konkave Wölbung wird entsprechend dem Laststrom gewählt.

Wenn das Modulationsreferenzsignal um einen bestimmten Wert erhöht wird, so fällt bei hohen Lastströmen ein Spannungsanstieg vergleichsweise gering aus. Wird hingegen bei niedrigen Lastströmen das Modulationsreferenzsignal um den gleichen bestimmten Wert erhöht, so sind Lastvariationen weitaus größer. Dies ist hauptsächlich parasitären Impedanzen innerhalb der Schaltung geschuldet, welche entweder durch Schalter oder andere elektronische Bauelemente im System des Umrichters verursacht sind. Die weitere Ausführungsform des erfindungsgemäßen Verfahrens, Signalflanken jeweiliger Trägersignale mit jeweiligen Wölbungen zu versehen, beseitigt daher vorteilhaft den verstärkten oder abgeschwächten Spannungsabfall je nach Auftreten solcher parasitären Scheinwiderstände bzw. Impedanzen. Die jeweiligen konvexen oder konkaven Wölbungen wirken den voranstehend beschriebenen Effekten in Abhängigkeit vom jeweilig fließenden Laststrom entgegen bzw. kompensieren sie, in dem durch geeignet konvexe oder konkave Ausformung der jeweiligen Signalflanken eine Ausbildung des jeweiligen Lastintervalls mit einer ähnlichen, aber den parasitären Impedanzen entgegengesetzt wirkenden Laststromabhängigkeit versehen werden kann. Die konkave, also nach innen bzw. auf die Zeitachse zulaufende Wölbung ist dabei hilfreich, um den Laststrom zu erhöhen, bzw. einen den Laststrom abmindernden Effekt zu kompensieren, wohingegen die konvexe, also nach außen bzw. von der Zeitachse weg gerichtete Wölbung dabei hilfreich ist, um den Laststrom zu erniedrigen, bzw. einen den Laststrom verstärkenden Effekt zu kompensieren.

In einer fortgesetzt noch weiteren Ausführungsform des erfindungsgemäßen Verfahrens werden Signalflanken mindestens eines Trägersignals, welches dem jeweilig $i$-ten Modul zugeordnet ist, um einen jeweiligen Wölbungswert $\beta_i$ konvex bzw. nach außen gewölbt. Gleichzeitig werden Signalflanken mindestens eines weiteren Trägersignals, welches dem jeweilig $j$-ten Modul zugeordnet ist, um einen Betrag eines jeweiligen negativen Wölbungswertes $\beta_j$ konkav bzw. nach innen gewölbt. Dabei werden die jeweiligen Wölbungswerte dergestalt gewählt, dass eine Summe über alle Wölbungswerte einen Wert Null ergibt:

$$\sum \beta_k = 0 \quad . \qquad\qquad (3)$$

Dadurch wird vorteilhaft eine Verteilung von Scheinwiderstandswerten der Module um einen Mittelwert kompensiert. Eine solche konvexe oder konkave Wölbung kann vorteilhaft unabhängig von oder zusätzlich zu der erfindungsgemäßen Wölbung der voranstehend beschriebenen noch weiteren Ausführungsform, welche die Kompensation einer Laststromabhängigkeit betrifft, erfolgen.

In einer anderen Ausführungsform des erfindungsgemäßen Verfahrens wird zusätzlich mindestens ein Trägersignal mit mindestens einem weiteren Trägersignal überlagert, so dass Multifrequenz-Trägersignale gebildet werden. Die miteinander überlagerten Trägersignale weisen vorteilhaft unterschiedliche Frequenzen auf. Durch Wahl geeigneter Grenzfrequenzen, vom Fachmann Englisch als "cut-off frequency" bezeichnet, kann eine von jedem Multifrequenz-Trägersignal resultierende Spannung unterschieden werden.

In einer weiter fortgesetzten Ausführungsform des erfindungsgemäßen Verfahrens wird eine jeweilige Amplitude mindestens einen Trägersignals, welches dem jeweilig $i$-ten Modul zugeordnet ist, um einen jeweiligen Skalierungswert $\lambda_i$ skaliert. Gleichzeitig wird eine jeweilige Amplitude mindestens eines weiteren Trägersignals, welches dem jeweilig $j$-ten Modul zugeordnet ist, um einen jeweiligen weiteren Skalierungswert $\lambda_j$ skaliert. Die jeweiligen Skalierungswerte werden dergestalt gewählt, dass eine Summe über alle inversen Skalierungswerte konstant gehalten wird:

$$\sum_{i=1}^{K} \frac{1}{\lambda_i} = \text{const} \quad . \qquad\qquad (4)$$

Bei K skalierten Amplituden ergibt sich ausgehend von ursprünglich bspw. mit dem Einheitswert 1 als Amplitude gebildeten Trägersignalen ein Wert der Konstante von const=$K$. Eine Vergrößerung/Verkleinerung der jeweiligen Amplitude führt dabei zu einer Verkürzung/Verlängerung des Lastintervalls des jeweiligen Moduls. Durch Einhaltung von Gl. 4 wird gewährleistet, dass ein niederfrequenter Anteil der sich am Strangende einstellenden Ausgabespannung unverändert bleibt.

Ferner wird ein Steuergerät für einen modularen Multilevelkonverter beansprucht, wobei der modulare Multilevelkonverter eine Vielzahl von Modulen mit mindestens einer Energiespeichereinheit und einer Mehrzahl steuerbarer Schalter umfasst. Das Steuergerät ist dazu konfiguriert,

- den modularen Multilevelkonverter mittels pulsweitenmodulierter Steuersignale anzusteuern,
- ein jeweiliges Steuersignal basierend auf einem jeweiligen Trägersignal, welches eine auf das jeweilige Modul bezogene Phasenverschiebung aufweist, und basierend auf mindestens einem Referenzsignal zu erzeugen,
- durch einen auf einem Größenvergleich basierenden Vergleich eines Signalverlaufs des jeweiligen Trägersignals mit dem mindestens einen Referenzsignal eine Zuschaltzeit der mindestens einen Energiespeichereinheit des jeweiligen Moduls zu einem Laststrom zu triggern, und

- den Signalverlauf des jeweiligen Trägersignals durch mindestens eine Veränderung innerhalb folgender drei Freiheitsgrade zu modifizieren, nämlich indem

  - das jeweilige Trägersignal gegenüber dem mindestens einen Referenzsignal vertikal verschoben wird und/oder
  - Signalflanken des jeweiligen Trägersignals konvex gewölbt werden und/oder
  - Signalflanken des jeweiligen Trägersignals konkav gewölbt werden,

und wobei insbesondere das Steuergerät weiter dazu konfiguriert ist, ein erfindungsgemäßes Verfahren auszuführen.

Das erfindungsgemäße Steuergerät ist vorteilhaft in der Lage, im Schaltkreis des modularen Multilevelkonverters parasitäre Anteile zu kompensieren und Ungleichheiten bzw. Ungleichgewichte zwischen Modulen unter Berücksichtigung eines jeweilig vorliegenden Systemzustands des modularen Multilevelkonverters auzugleichen.

Ferner wird ein modularer Multilevelkonverter beansprucht, welcher ein erfindungsgemäßes Steuergerät aufweist und auf dem ein erfindungsgemäßes Verfahren ausführbar ist.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Figuren werden zusammenhängend und übergreifend beschrieben, gleichen Komponenten sind dieselben Bezugszeichen zugeordnet.

Figur 1a zeigt schematisch eine Schaltung zu Nulllage-Verschiebungen von Trägersignalen in einer Ausführungsform des erfindungsgemäßen Verfahrens.

Figur 1b zeigt graphisch Signalverläufe von Trägersignalen bei Nulllage-Verschiebungen in der Ausführungsform des erfindungsgemäßen Verfahrens.

Figur 1c zeigt graphisch einen Signalverlauf von Trägersignalen mit Zuschaltzeiten in der Ausführungsform des erfindungsgemäßen Verfahrens.

Figur 1d zeigt graphisch einen Signalverlauf von mehreren Trägersignalen bei Nulllage-Verschiebung in der Ausführungsform des erfindungsgemäßen Verfahrens.

Figur 2a zeigt schematisch eine Schaltung zu einer Referenzsignalverschiebung in einer weiteren Ausführungsform des erfindungsgemäßen Verfahrens.

Figur 2b zeigt graphisch Signalverläufe von Trägersignalen mit Referenzsignalverschiebungen und Zuschaltzeiten in der weiteren Ausführungsform des erfindungsgemäßen Verfahrens.

Figur 3 zeigt graphisch Signalverläufe von Trägersignalen mit jeweiligen Wölbungen in einer noch weiteren Ausführungsform des erfindungsgemäßen Verfahrens.

Figur 4a zeigt schematisch eine Schaltung zu einer Wölbung von Trägersignalen in einer fortgesetzt noch weiteren Ausführungsform des erfindungsgemäßen Verfahrens.

Figur 4b zeigt graphisch Signalverläufe von Trägersignalen mit Wölbungen in der fortgesetzt noch weiteren Ausführungsform des erfindungsgemäßen Verfahrens.

Figur 5a zeigt schematisch eine Schaltung zu Multifrequenz-Trägersignalen in einer anderen Ausführungsform des erfindungsgemäßen Verfahrens.

Figur 5b zeigt graphisch einen Signalverlauf von Multifrequenz-Trägersignalen in der anderen Ausführungsform des erfindungsgemäßen Verfahrens.

Figur 6a zeigt schematisch eine Schaltung zur Amplitudenskalierung in einer weiter fortgesetzten Ausführungsform des erfindungsgemäßen Verfahrens.

Figur 6b zeigt graphisch Signalverläufe zur Amplitudenskalierung in der weiter fortgesetzten Ausführungsform des erfindungsgemäßen Verfahrens.

Figur 7 zeigt graphisch Signalverläufe von Trägersignalen mit verschiedenen Modifikationsmöglichkeiten in einer noch weiter fortgesetzten Ausführungsform des erfindungsgemäßen Verfahrens.

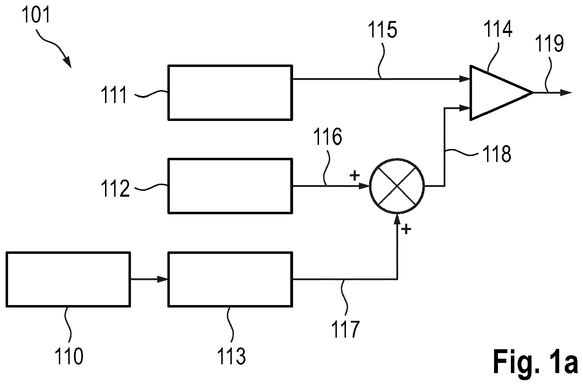

In Figur 1a wird schematisch eine Schaltung 101 zu Nulllage-Verschiebungen von Trägersignalen in einer Ausführungsform des erfindungsgemäßen Verfahrens gezeigt. Ein Energiespeichermanagementsystem 110 stellt einer Zuschaltzeitsteuerungseinheit 113 Informationen zu einem Ladezustand von Energiespeicherelementen jeweiliger Module bereit, auf deren Grundlage die Zuschaltzeitsteuerungseinheit 113 jeweilige Nulllage-Verschiebungen 117 der den jeweiligen Modulen zugeordneten Trägersignalen vornimmt. Ein Phasenverschiebungszähler 112 stellt multiple, jeweilig phasenverschobene Trägersignale 116 bereit, welches über einen Mischer mit der jeweiligen Nulllage-Verschiebung 117 versehen wird und als ein modifiziertes Trägersignal 118 einem Komparator 114 zugeht. Gleichzeitig stellt ein Referenzsignalregler 111 ein einzelnes Referenzsignal 115 bereit, welches ebenfalls dem Komparator 114 zugeht. Der Komparator 114 vergleicht das Modulationsreferenzsignal 115 mit den jeweiligen modifizierten Trägersignalen 118 und stellt den jeweilig zugeordneten Modulen multiple Schaltsignale 119 bereit, so bspw. bei Unterschreiten des Referenzsignals 115 durch das jeweilige modifizierten Trägersignal 118 dem jeweilig zugeordneten Modul einen Einschaltpuls, und bei Überschreiten des Referenzsignals 115 durch das jeweilige modifizierten Trägersignal 118 dem jeweilig zugeordneten Modul einen Ausschaltpuls. Damit ermöglicht diese Ausführungsform des erfindungsgemäßen Verfahrens vorteilhaft unterschiedliche Ladungszustände unter den jeweiligen Modulen auszugleichen, indem Module mit vergleichsweise stärker entladenen Energiespeichern geschont (positiver Nulllage-Verschiebungswert), und Module mit vergleichsweise weniger entladenen Energiespeichern höher belastet werden (negativer Nulllage-Verschiebungswert).

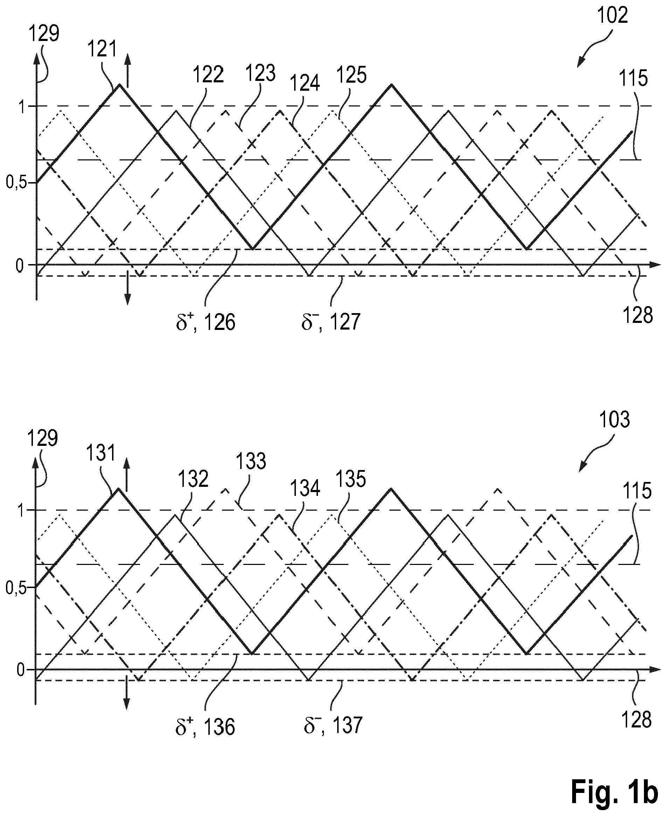

In Figur 1b werden graphisch Signalverläufe 102 und 103 von identischen, aber um jeweilig 72° Winkelgrad phasenverschobenen Trägersignalen 121, 122, 123, 124, 125, 131, 132, 133, 134, 135 bei Nulllage-Verschiebungen 126, 127, 136, 137 in der Ausführungsform des erfindungsgemäßen Verfahrens gezeigt. Die jeweiligen Trägersignale 121, 122, 123, 124, 125, 131, 132, 133, 134, 135 sind in ihrem Zeitverlauf entlang einer Zeitachse 128 aufgetragen, wobei für die hiesige Betrachtung alle Trägersignale 121, 122, 123, 124, 125, 131, 132, 133, 134, 135 in ihrer Amplitude auf einen Wert Eins einer Signalachse 129 normiert seien. In einem ersten Schritt ist im Signalverlauf 102 ein erstes Trägersignal 121 um einen positiven Nulllage-Verschiebungswert $\delta^+$ 126 vertikal nach oben verschoben. Da das Referenzsignal 115 unverändert bleibt, ergibt sich für das zugeordnete Modul bzw. dessen mindestens eine Energiespeichereinheit eine kürzere Zuschaltzeit zu einem in einem Strang von Modulen fließenden Laststrom. Um dies zu kompensieren, wird die Nulllage der weiteren Trägersignale 122, 123, 124, 125 um einen negativen Nulllage-Verschiebungswert $\delta^-$ 127 vertikal nach unten verschoben. Um Gl. 1 zu genügen, muss $\delta^+ + 4 \cdot \delta^- = 0$ gelten, d. h. die Nulllage des ersten Trägersignals 121 ist um einen Vierfaches eines Werte vertikal nach oben verschoben, während die weiteren Trägersignale 122, 123, 124, 125 jeweils um ein Einfaches dieses Wertes vertikal nach unten verschoben sind. Um bspw. während eines Entladebetriebes die mindestens eine Energiespeichereinheit eine weiteren Moduls, bspw. dasjenige, dem das dritte Trägersignal 133 zugeordnet ist, zu schonen, wird zusätzlich die Nulllage dieses Trägersignals 133 um einen positiven Nulllage-Verschiebungswert $\delta^+$ 136 nach oben verschoben. Um den Laststrom davon unbehelligt zu lassen, ergibt sich für den negativen Nulllage-Verschiebungswert $\delta^-$ 137 aus Gl. 1, dass für diesen Fall $\delta^- = -2 \cdot \delta^+/3$ gelten muss.

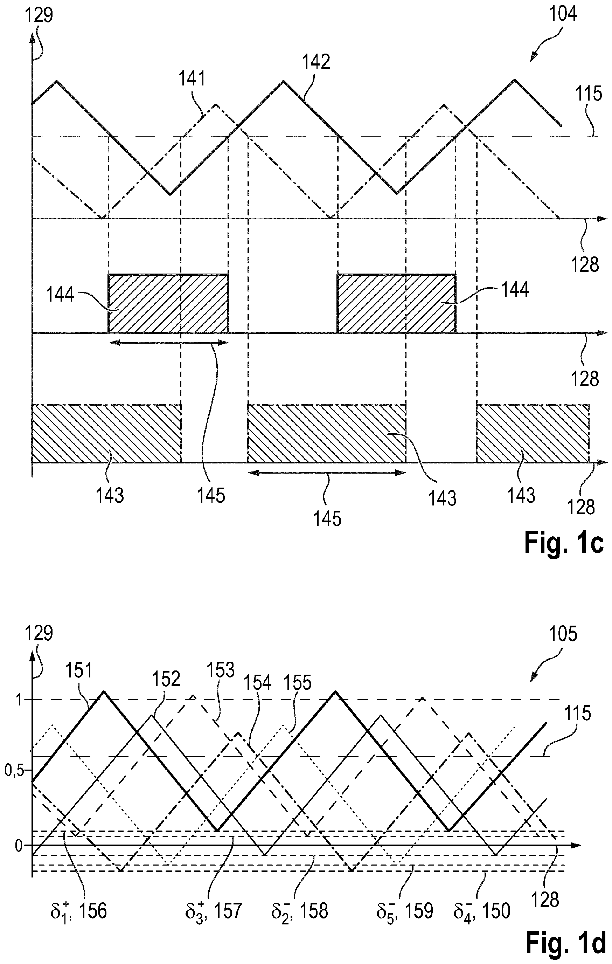

In Figur 1c wird graphisch ein Signalverlauf 104 von Trägersignalen 141, 142 mit resultierenden Zuschaltzeiten 143, 144 in der Ausführungsform des erfindungsgemäßen Verfahrens gezeigt. Das Trägersignal 141 ist einem *i*-ten Modul zugeordnet, wobei sich die Zuschaltzeit 143 der mindestens einen Energiespeichereinheit mit einer Zeitdauer $T_i$ 145 aus einem Unterschreiten des Trägersignals 141 im Vergleich mit dem Referenzsignal 115 ergibt. Das Trägersignal 142 ist einem *j*-ten Modul zugeordnet sein, wobei die Zuschaltzeit 144 mit einer Zeitdauer $T_j$ 146 aus einem Unterschreiten des Referenzsignals 115 durch das Trägersignal 142 folgt. Das Trägersignal 142 ist in seiner Nulllage angehoben, weshalb sich im Vergleich mit der Zuschaltzeit 143 des *i*-ten Moduls für das *j*-te Modul eine kürzere Zuschaltzeit 144 ergibt.

In Figur 1d wird graphisch ein Signalverlauf 105 von mehreren Trägersignalen 151, 152, 153, 154, 155 mit jeweiligen Nulllage-Verschiebungen 156, 157, 158, 159, 150 in der Ausführungsform des erfindungsgemäßen Verfahrens gezeigt. Je nach Ladezustand der mindestens einen Energiespeichereinheit in dem *k*-ten Modul, *k*=1 bis 5, ist dem Trägersignal 151, 152, 153, 154, 155 ein jeweiliger Nulllage-Verschiebungswert $\delta_1^+$ 156, $\delta_2^-$ 158, $\delta_3^+$ 157, $\delta_4^-$ 150, $\delta_5^-$ 159 zugeordnet. Für das in der Figur 1d gezeigte Beispiel muss laut Gl. 1 gelten, dass

$$\delta_1^+ + \delta_2^- + \delta_3^+ + \delta_4^- + \delta_5^- = 0,$$ um den Laststrom des Strangs gegenüber einem Signalverlauf ohne Nulllage-Verschiebungen unverändert zu lassen.

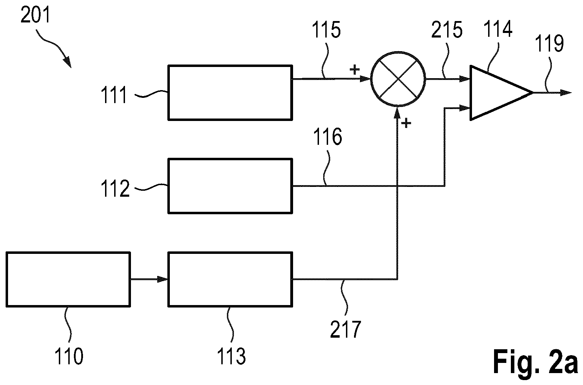

In Figur 2a wird schematisch eine Schaltung 201 zu einer Referenzsignalverschiebung in einer weiteren Ausführungsform des erfindungsgemäßen Verfahrens gezeigt. Das Energiespeichermanagementsystem 110 stellt der Zuschaltzeitsteuerungseinheit 113 Informationen zu einem Ladezustand von Energiespeicherelementen jeweiliger Module bereit, auf deren Grundlage die Zuschaltzeitsteuerungseinheit 113 jeweilige Referenzsignalverschiebungen 217 der den jeweiligen Modulen zugeordneten Trägersignalen vornimmt. Ein Phasenverschiebungszähler 112 stellt multiple, jeweilig phasenverschobene Trägersignale 116 bereit, welche einem Komparator 114 zugehen. Gleichzeitig stellt ein Referenzsignalregler 111 ein einzelnes Referenzsignal 115 bereit, welches über einen Mischer mit der jeweiligen Referenzsignalverschiebung 217 versehen wird und als ein modifiziertes Referenzsignal 215 ebenfalls dem Komparator 114 zugeht. Der Komparator 114 vergleicht die jeweilig modifizierten Referenzsignale 215 mit den jeweilig phasenverschobenen Trägersignalen 116, und stellt den jeweilig zugeordneten Modulen multiple Schaltsignale 119 bereit, so bspw. bei Unterschreiten des modifizierten Referenzsignals 215 durch das jeweilige Trägersignal 116 dem jeweilig zugeordneten Modul einen Einschaltpuls, und bei Überschreiten des modifizierten Referenzsignals 215 durch das jeweilige Trägersignal 116 dem jeweilig zugeordneten Modul einen Ausschaltpuls.

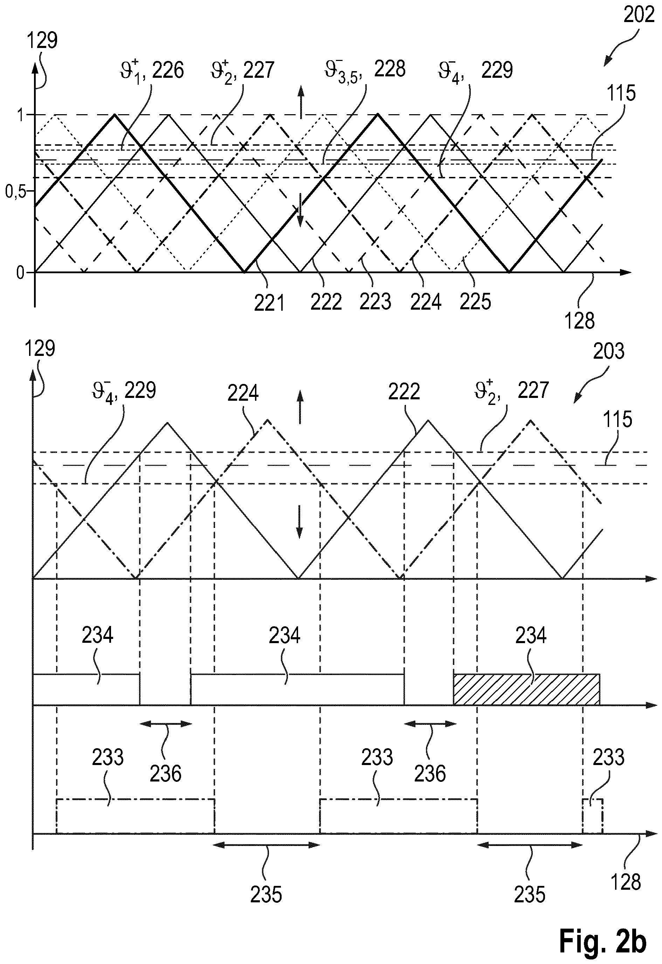

In Figur 2b werden graphisch Signalverläufe 202 und 203 von Trägersignalen 221, 222, 223, 224, 225 mit verschobenen Referenzsignalen 226, 227, 228, 229 und Zuschaltzeiten 233, 234 in der weiteren Ausführungsform des erfindungsgemäßen Verfahrens gezeigt. Die jeweiligen Trägersignale 221, 222, 223, 224, 225 sind in ihrem Zeitverlauf entlang der Zeitachse 128 aufgetragen, wobei für die hiesige Betrachtung alle Trägersignale 221, 222, 223, 224, 225 in ihrer Amplitude auf einen Wert Eins einer Signalachse 129 normiert seien. Im Signalverlauf 202 ist ein erstes modifiziertes Referenzsignal 226 gegenüber dem Referenzsignal 115 um einen positiven Referenzsignal-Verschiebungswert $\vartheta_1^+$ 226 vertikal nach oben verschoben. Im Verhältnis zum ursprünglichen Referenzsignal 115 ergibt sich entsprechend für das erste Trägersignal 221 bzw. für die mindestens eine Energiespeichereinheit des zugeordneten ersten Moduls eine längere Zuschaltzeit zu einem in einem Strang von Modulen fließenden Laststrom. Auch ein zweites modifiziertes Referenzsignal 227 sei um einen positiven Referenzsignal-Verschiebungswert $\vartheta_2^+$ 227 vertikal nach oben verschoben, und auch hier ergibt sich entsprechend für das zugeordnete zweite Modul ein längere Zuschaltzeit im Vergleich zu derjenigen Zuschaltzeit, welche sich mit ursprünglichem Referenzsignal 115 ergäbe. Um dies zu kompensieren, werden die modifizierten Referenzsignale 228 und 229 gegenüber dem Referenzsignal 115 um einen jeweiligen negativen Referenzsignal-Verschiebungswert $\vartheta_{3,5}^-$ und $\vartheta_4^-$ vertikal nach unten verschoben. Die sich aus dem dritten, vierten und fünften Trägersignalen 223, 224, 225 ergebenden Zuschaltzeiten der jeweilig zugeordneten Module verkürzen sich entsprechend. Um den Laststrom des Strangs gegenüber einem Signalverlauf ohne Referenzsignal-Verschiebungen unverändert zu lassen, muss nach Gl. 2 gelten, dass $\vartheta_1^+ + \vartheta_2^+ + 2*\vartheta_{3,5}^- + \vartheta_4^- = 0$ erfüllt ist.

Die Auswirkung der jeweiligen Verschiebung $\vartheta_2^+$, $\vartheta_4^-$ zweier im Signalverlauf 202 exemplarisch genauer beleuchteter Referenzsignale 227, 229 auf die jeweilig resultierende Zuschaltzeit 233, 234 ist im Signalverlauf 203 dargestellt. Das Trägersignal 222 ist dem zweiten Modul zugeordnet, wobei sich die Zuschaltzeit 234 der mindestens einen Energiespeichereinheit des zweiten Moduls mit einer Zeitdauer $T_2$ 236 aus einem Unterschreiten des Trägersignals 222 im Vergleich mit dem gegenüber dem Referenzsignal 115 um den Referenzsignal-Verschiebungswert $\vartheta_2^+$ verschobenen Referenzsignal 227 ergibt. Das Trägersignal 224 ist dem vierten Modul zugeordnet, wobei sich die Zuschaltzeit 233 der mindestens einen Energiespeichereinheit des vierten Moduls mit einer Zeitdauer $T_4$ 235 aus einem Unterschreiten des Trägersignals 224 im Vergleich mit dem gegenüber dem Referenzsignal 115 um den Referenzsignal-Verschiebungswert $\vartheta_4^-$ verschobenen Referenzsignal 229 ergibt.

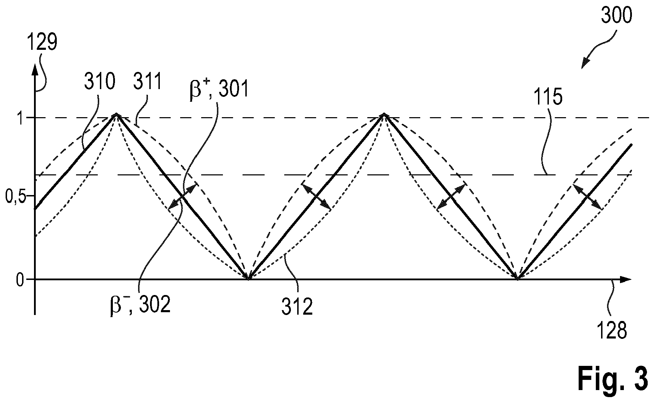

In Figur 3 werden graphisch Signalverläufe 300 von Trägersignalen 311, 312 mit jeweiligen Wölbungen $\beta^+$ 301 und $\beta^-$ 302 in einer noch weiteren Ausführungsform des erfindungsgemäßen Verfahrens gezeigt. Eine jeweilige Signalflanke des Trägersignals 311 wird gegenüber der Signalflanke des unverformten Trägersignals 310 um einen Wölbungswert $\beta^+$ 301 konvex bzw. nach außen (von der Zeitachse 128 weg) gewölbt, d. h. Werte der jeweiligen Signalflanke sind im Vergleich zur Signalflanke des unverformten Trägersignals 310 erhöht. Da das Referenzsignal 115 unverändert bleibt, verkürzt sich damit die Zeitdauer der Zuschaltzeit und der Strombeitrag eines jeweiligen von einem solchen Trägersignal 311 gesteuerten Moduls wird abgesenkt. Eine jeweilige Signalflanke des Trägersignals 312 wird gegenüber der Signalflanke des unverformten Trägersignals 310 um einen Betrag eines negativen Wölbungswertes $\beta^-$ 302 konkav

bzw. nach innen (zu der Zeitachse 128 hin) gewölbt, d. h. Werte der jeweiligen Signalflanke sind im Vergleich zur Signalflanke des unverformten Trägersignals 310 erniedrigt. Da das Referenzsignal 115 unverändert bleibt, erhöht sich damit die Zeitdauer der Zuschaltzeit und der Strombeitrag eines jeweiligen von einem solchen Trägersignal 312 gesteuerten Moduls wird vergrößert. Damit hat diese noch weitere Ausführungsform Auswirkungen auf einen Modulationsindex bzw. den effektiv durch den Strang an Modulen fließenden Laststrom und kann vorteilhaft dazu eingesetzt werden, vom angefragten Laststrom abhängige spannungsabsenkende Effekte bei hohen Lasten oder parasitäre Impedanzen zu kompensieren.

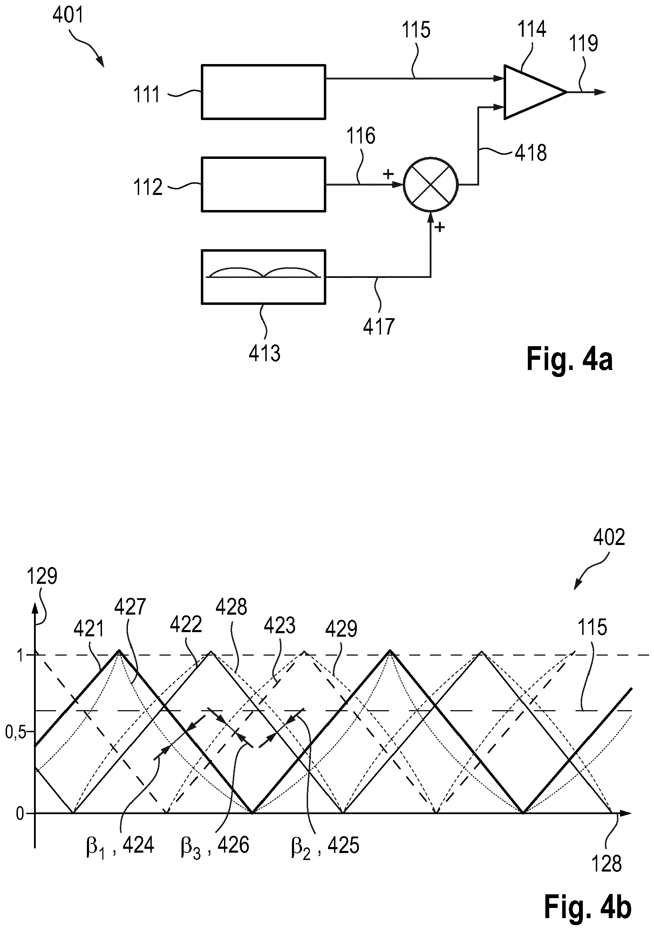

In Figur 4a wird schematisch eine Schaltung 401 zu einer Wölbung von Trägersignalen in einer fortgesetzt noch weiteren Ausführungsform des erfindungsgemäßen Verfahrens gezeigt. Je nach fließendem Laststrom, werden von einer Kompensierungskurveneinheit 413 jeweilige Wölbungswerte 417 erzeugt, mit denen jeweilige von dem Phasenverschiebungszähler 112 bereitgestellte phasenverschobene Trägersignale 116 über einen Mischer zu einem jeweiligen gewölbten Trägersignal 418 modifiziert werden und einem Komparator 114 zugehen. Gleichzeitig stellt ein Referenzsignalregler 111 ein einzelnes Referenzsignal 115 bereit, welches ebenfalls dem Komparator 114 zugeht. Der Komparator 114 vergleicht das Modulationsreferenzsignal 115 mit dem jeweiligen gewölbten Trägersignal 418, und stellt den jeweilig zugeordneten Modulen multiple Schaltsignale 119 bereit, bspw. bei Unterschreiten des Referenzsignals 115 durch das jeweilige gewölbte Trägersignal 418 dem jeweilig zugeordneten Modul einen Einschaltpuls, und bei Überschreiten des Referenzsignals 115 durch das jeweilige gewölbte Trägersignal 418 dem jeweilig zugeordneten Modul einen Ausschaltpuls.

In Figur 4b werden graphisch Signalverläufe 402 von gewölbten Trägersignalen 427, 428, 429 mit jeweiligen gegenüber unverformten Trägersignalen 421, 422, 423 gebildeten Wölbungswerten $\beta_1$ 424, $\beta_2$ 425, $\beta_3$ 426 in der fortgesetzt noch weiteren Ausführungsform des erfindungsgemäßen Verfahrens gezeigt. Solche gewölbten Trägersignale 427, 428, 429 werden vorteilhaft eingesetzt, um eine Verteilung von Scheinwiderstandswerten der Module um einen Mittelwert zu kompensieren. Solche Wölbungen können den in Fig. 3 beschriebenen Ausformungen aufgesetzt werden, allerdings muss dabei Gl. 3 beachtet werden, um den Laststrom des Strangs nicht zusätzlich zu beeinflussen. Für das in der Figur 4b gezeigte Beispiel ergibt sich damit, dass der Betrag des nach innen gerichteten Wölbungswertes $\beta_1$ 424 der Summe aus den nach außen gerichteten beiden Wölbungswerten $\beta_2$ 425 und $\beta_3$ 426 entsprechen muss.

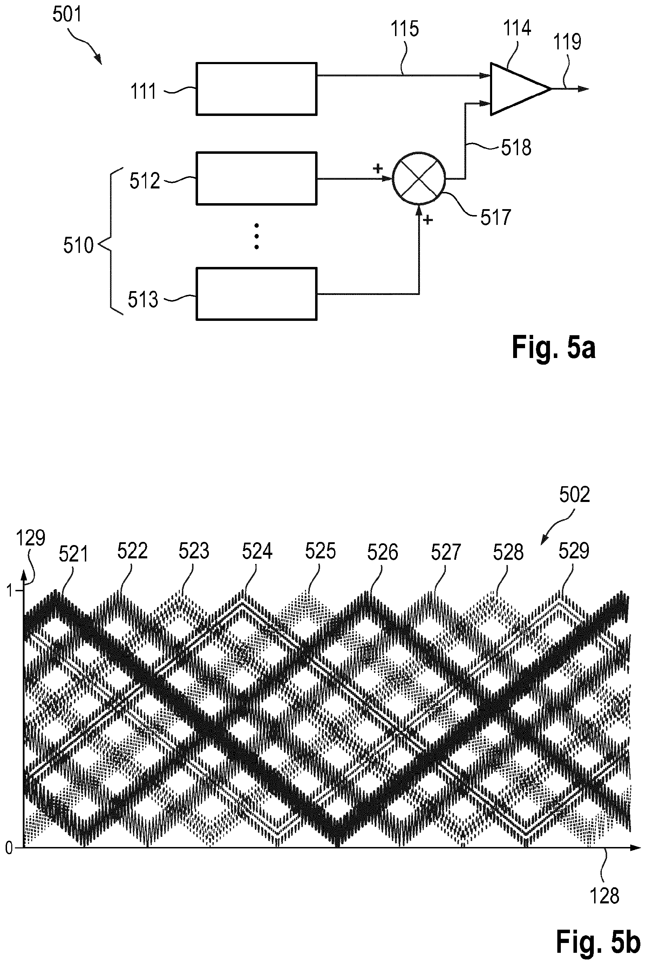

In Figur 5a wird schematisch eine Schaltung 501 zu Multifrequenz-Trägersignalen 518 in einer anderen Ausführungsform des erfindungsgemäßen Verfahrens gezeigt. Ein Anzahl von N Phasenverschiebungszählern 510 stellt jeweilig phasenverschobene Trägersignale bereit. Ein von einem ersten Phasenverschiebungszähler 512 stammendes Trägersignal wird über einen Mischer 517 jeweilig mit weiteren, bis zu vom einem N-ten Phasenverschiebungszähler 513 erzeugten Trägersignalen zu einem jeweiligen Multifrequenz-Trägersignal 518 modifiziert. Mindestens das von dem Phasenverschiebungszähler 512 stammende Trägersignal weist dabei eine andere Frequenz wie die weiteren Trägersignale auf. Die weiteren Trägersignale sind bspw. mit derjenigen Frequenz gebildet, über die auch die Phasenverschiebung gebildet wird.

In Figur 5b werden graphisch Signalverläufe 502 von Multifrequenz-Trägersignalen 521, 522, 523, 524, 525, 526, 527, 528, 529 in der anderen Ausführungsform des erfindungsgemäßen Verfahrens gezeigt. Bei den insgesamt neun Multifrequenz-Trägersignalen 521, 522, 523, 524, 525, 526, 527, 528, 529 wurden neun phasenverschobenen Trägersignalen ein aus dem Phasenverschiebungszähler 512 der Figur 5a stammendes Trägersignal mit vergleichsweise höherer Frequenz aufmoduliert.

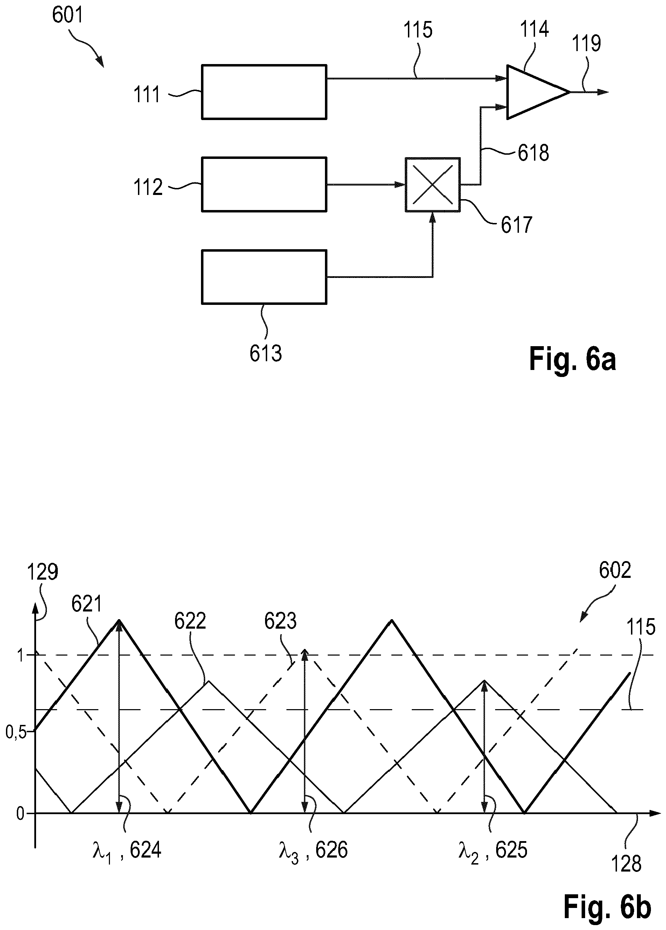

In Figur 6a wird schematisch eine Schaltung 601 zur Amplitudenskalierung in einer weiter fortgesetzten Ausführungsform des erfindungsgemäßen Verfahrens gezeigt. Eine Skalierungsfaktorsteuerungseinheit 613 stellt basierend auf dem Ladezustand von Energiespeicherelementen jeweiliger Module einen jeweiligen Skalierungsfaktor bereit, welcher durch einen Multiplikator 617 mit jeweiligen den jeweiligen Modulen zugeordneten Trägersignalen eines Phasenverschiebungszählers 116 multipliziert wird. Daraus hervorgehende amplitudenskalierte Trägersignale 618 gehen dem Komparator 114 zu. Gleichzeitig stellt ein Referenzsignalregler 111 ein einzelnes Referenzsignal 115 bereit, welches ebenfalls dem Komparator 114 zugeht. Der Komparator 114 vergleicht das Modulationsreferenzsignal 115 mit dem jeweiligen amplitudenskalierten Trägersignal 618, und stellt den jeweilig zugeordneten Modulen multiple Schaltsignale 119 bereit.

In Figur 6b wird graphisch Signalverläufe 602 zur Amplitudenskalierung von drei Trägersignalen 621, 622, 623 in der weiter fortgesetzten Ausführungsform des erfindungsgemäßen Verfahrens gezeigt. Je nach Ladezustand der mindestens einen Energiespeichereinheit in dem $m$-ten Modul, $m$=1 bis 3, ist dem Trägersignal 621, 622, 623 ein jeweiliger Skalierungswert $\lambda_1$ 624, $\lambda_2$ 625, $\lambda_3$ 626 zugeordnet. Ein mit einem Skalierungsfaktor größer Eins versehenes jeweiliges Trägersignal hat eine kürzere Zuschaltzeit des jeweilig zugeordneten Moduls zur Folge, während ein mit einem Skalierungsfaktor kleiner Eins versehenes jeweiliges Trägersignal eine längere Zuschaltzeit des jeweilig zugeordneten Moduls zur Folge hat. Für das in der Figur 6b gezeigte Beispiel muss laut Gl. 4 gelten, dass $1/\lambda_1 + 1/\lambda_2 + 1/\lambda_3$ = const erfüllt ist, um den Laststrom des Strangs gegenüber einem Signalverlauf ohne Amplitudenskalierung unverändert zu lassen.

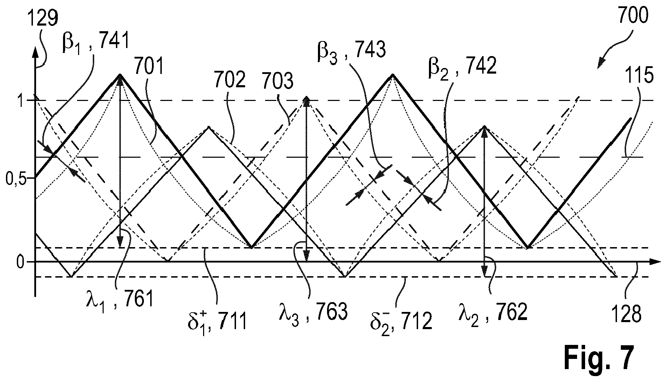

In Figur 7 werden graphisch Signalverläufe 700 von Trägersignalen 701, 702, 703 mit verschiedenen Modifikationsmöglichkeiten in einer noch weiter fortgesetzten Ausführungsform des erfindungsgemäßen Verfahrens gezeigt. Alle Modifikationsmöglichkeiten von phasenverschoben überlagerten Trägersignalen in den voranstehend aufgezeigten Ausführungsformen bzw. voranstehend beschriebenen Figuren können wahlweise in beliebiger Kombination ausgestaltet werden. So ist das Trägersignal 701 sowohl mit einer konkaven Wölbung mit Wölbungswert $\beta_1$ 741, einer Amplitudenskalierung mit Skalierungswert $\lambda_1$ 761 und Nulllage-Verschiebung mit Nulllage-Verschiebungswert $\delta_1^+$ 711 versehen. Das Trägersignal 702 ist mit einer konvexen Wölbung mit Wölbungswert $\beta_2$ 742, einer Amplitudenskalierung mit Skalierungswert $\lambda_2$ 762 und Nulllage-Verschiebung mit Nulllage-Verschiebungswert $\delta_2^-$ 712 versehen. Schließlich ist das Trägersignal 703 mit einer konkaven Wölbung mit Wölbungswert $\beta_3$ 743, einer Amplitudenskalierung mit Skalierungswert $\lambda_3$ 763 und keiner Nulllage-Verschiebung versehen.

**Bezugszeichenliste**

| | |
|---|---|
| 101 | Schaltung zur Nulllage-Verschiebung |
| 102 | Signalverlauf mit einem gehobenem Trägersignal |
| 103 | Signalverlauf mit zwei gehobenen Trägersignalen |
| 104 | Signalverlauf mit Schaltzeiten |
| 105 | Signalverlauf mit mehreren Nulllage-Verschiebungen |
| 110 | Energiespeichermanagementsystem |
| 111 | Referenzsignalregler |
| 112 | Phasenverschiebungszähler Trägersignal |
| 113 | Zuschaltzeitsteuerungseinheit |
| 114 | Komparator |
| 115 | Referenzsignal |
| 116 | Multiple Trägersignale |
| 117 | Nulllage-Verschiebung |
| 118 | Modifizierte Trägersignale |
| 119 | Multiple Schaltpulse |
| 121 | Erstes Trägersignal |
| 122 | Zweites Trägersignal |
| 123 | Drittes Trägersignal |
| 124 | Viertes Trägersignal |
| 125 | Fünftes Trägersignal |
| 126 | Positive vertikale Verschiebung um $\delta^+$ |
| 127 | Negative vertikale Verschiebung um $\delta^-$ |
| 128 | Zeitachse |
| 129 | Signalachse |
| 131 | Erstes Trägersignal |
| 132 | Zweites Trägersignal |
| 133 | Drittes Trägersignal |
| 134 | Viertes Trägersignal |
| 135 | Fünftes Trägersignal |
| 136 | Positive vertikale Verschiebung um $\delta^+$ |
| 137 | Negative vertikale Verschiebung um $\delta^-$ |
| 141 | Trägersignal des i-ten Moduls |
| 142 | Trägersignal des j-ten Moduls |
| 143 | Zuschaltzeit des i-ten Moduls |
| 144 | Zuschaltzeit des j-ten Moduls |
| 145 | Zeitdauer $T_i$ |
| 146 | Zeitdauer $T_j$ |
| 150 | Negative vertikale Verschiebung um $\delta_4^-$ |
| 151 | Erstes Trägersignal |
| 152 | Zweites Trägersignal |

| | |
|---|---|
| 153 | Drittes Trägersignal |
| 154 | Viertes Trägersignal |
| 155 | Fünftes Trägersignal |
| 156 | Positive vertikale Verschiebung um $\delta_1^+$ |
| 157 | Positive vertikale Verschiebung um $\delta_3^+$ |
| 158 | Negative vertikale Verschiebung um $\delta_2^-$ |
| 159 | Negative vertikale Verschiebung um $\delta_5^-$ |
| 201 | Schaltung zur Referenzsignalverschiebung |
| 202 | Signalverlauf zur Referenzsignalverschiebung |
| 203 | Signalverlauf mit Schaltzeiten |
| 215 | Modifiziertes Referenzsignal |
| 217 | Multiple Referenzsignalanpassungen |
| 221 | Erstes Trägersignal |
| 222 | Zweites Trägersignal |
| 223 | Drittes Trägersignal |
| 224 | Viertes Trägersignal |
| 225 | Fünftes Trägersignal |
| 226 | Erstes Referenzsignal um $\vartheta_1^+$ vertikal nach oben verschoben |
| 227 | Zweites Referenzsignal um $\vartheta_2^+$ vertikal nach oben verschoben |
| 228 | Drittes Referenzsignal um $\vartheta_{3,5}^-$ vertikal nach unten verschoben |
| 229 | Viertes Referenzsignal um $\vartheta_4^-$ vertikal nach unten verschoben |
| 233 | Schaltzeiten des vierten Moduls |
| 234 | Schaltzeiten des zweiten Moduls |
| 235 | Zeitdauer $T_4$ |
| 236 | Zeitdauer $T_2$ |
| 300 | Signalverlauf zur Signalflankenwölbung |
| 301 | Wölbung nach außen mit Wert $\beta^+$ |
| 302 | Wölbung nach innen mit Wert $\beta^-$ |
| 310 | Unverformtes Trägersignal |
| 311 | Konvexes Trägersignal |
| 312 | Konkaves Trägersignal |
| 401 | Schaltung zur Signalflankenwölbung |
| 402 | Signalverläufe mit Signalflankenwölbung |
| 413 | Erzeugung Wölbungswerte |
| 417 | Trägersignalwölbungen |
| 418 | Gewölbte Trägersignale |
| 421 | Erstes Trägersignal |
| 422 | Zweites Trägersignal |
| 423 | Drittes Trägersignal |
| 424 | Wölbung nach innen mit Wölbungswert $\beta_1$ |
| 425 | Wölbung nach außen mit Wölbungswert $\beta_2$ |
| 426 | Wölbung nach außen mit Wölbungswert $\beta_3$ |
| 427 | Erstes Trägersignal mit konkaven Signalflanken |
| 428 | Zweites Trägersignal mit konvexen Signalflanken |
| 429 | Drittes Trägersignal mit konvexen Signalflanken |
| 501 | Schaltung zur Multifrequenz-Trägersignalen |
| 502 | Signalverlauf mit Multifrequenz-Trägersignalen |
| 510 | Erzeugung Trägersignale |
| 512 | Erstes Trägersignal |
| 513 | N-tes Trägersignal |
| 517 | Mischer von Trägersignalen |
| 518 | Kombinierte Trägersignale |
| 521 | Erstes Multifrequenz-Trägersignal |

| 522 | Zweites Multifrequenz-Trägersignal |
|---|---|
| 523 | Drittes Multifrequenz-Trägersignal |
| 524 | Viertes Multifrequenz-Trägersignal |
| 525 | Fünftes Multifrequenz-Trägersignal |
| 526 | Sechstes Multifrequenz-Trägersignal |
| 527 | Siebtes Multifrequenz-Trägersignal |
| 528 | Achtes Multifrequenz-Trägersignal |
| 529 | Neuntes Multifrequenz-Trägersignal |
| 601 | Schaltung zur Amplitudenskalierung |
| 602 | Signalverlauf mit Amplitudenskalierung |
| 613 | Skalierungsfaktor |
| 617 | Multiplikation Skalierungsfaktor mit Trägersignal |
| 618 | Modifizierte Trägersignale |
| 621 | Erstes Trägersignal |
| 622 | Zweites Trägersignal |
| 623 | Drittes Trägersignal |
| 624 | Skalierungsfaktor $\lambda_1$ |
| 625 | Skalierungsfaktor $\lambda_2$ |
| 626 | Skalierungsfaktor $\lambda_3$ |
| 700 | Signalverlauf mit modifizierten Trägersignalen |
| 701 | Erstes Trägersignal |
| 702 | Zweites Trägersignal |
| 703 | Drittes Trägersignal |
| 711 | Positive vertikale Verschiebung um $\delta_1^+$ |
| 712 | Negative vertikale Verschiebung um $\delta_2^-$ |
| 741 | Wölbung nach innen mit Wölbungswert $\beta_1$ |
| 742 | Wölbung nach außen mit Wölbungswert $\beta_2$ |
| 743 | Wölbung nach innen mit Wölbungswert $\beta_3$ |
| 761 | Skalierungsfaktor $\lambda_1$ |
| 762 | Skalierungsfaktor $\lambda_2$ |
| 763 | Skalierungsfaktor $\lambda_3$ |

**Patentansprüche**

1. Verfahren zu einer Ansteuerung eines modularen Multilevelkonverters, wobei der modulare Multilevelkonverter eine Vielzahl von Modulen mit mindestens einer Energiespeichereinheit und einer Mehrzahl steuerbarer Schalter umfasst, wobei der modulare Multilevelkonverter mittels pulsweitenmodulierter Steuersignale (119) angesteuert wird, wobei ein jeweiliges Steuersignal (119) basierend auf einem jeweiligen Trägersignal (116, 118, 121, 122, 123, 124, 125, 131, 132, 133, 134, 135, 141, 142, 151, 152, 153, 154, 155, 221, 222, 223, 224, 225, 310, 421, 422, 423, 518, 521, 522, 523, 524, 525, 526, 527, 528, 529, 618, 621, 622, 623, 701, 702, 703), welches eine auf das jeweilige Modul bezogene Phasenverschiebung aufweist, und basierend auf mindestens einem Referenzsignal (115, 226, 227, 228, 229) erzeugt wird, wobei durch einen auf einem Größenvergleich basierenden Vergleich eines Signalverlaufs des jeweiligen Trägersignals (116, 118, 121, 122, 123, 124, 125, 131, 132, 133, 134, 135, 141, 142, 151, 152, 153, 154, 155, 221, 222, 223, 224, 225, 310, 421, 422, 423, 518, 521, 522, 523, 524, 525, 526, 527, 528, 529, 618, 621, 622, 623, 701, 702, 703) mit dem mindestens einen Referenzsignal (115, 226, 227, 228, 229) eine Zuschaltzeit (143, 144, 233, 234) der mindestens einen Energiespeichereinheit des jeweiligen Moduls zu einem Laststrom getriggert wird, und wobei der Signalverlauf (102, 103, 104, 105, 202, 203, 300, 402, 502, 602, 700) des jeweiligen Trägersignals (116, 123, 124, 125, 141, 221, 222, 223, 224, 225, 310, 421, 422, 423) durch mindestens eine Veränderung (117, 217, 417, 517, 617) innerhalb folgender drei Freiheitsgrade modifiziert wird, nämlich indem das jeweilige Trägersignal (118, 121, 122, 131, 132, 133, 134, 135, 142, 151, 152, 153, 154, 155, 518, 521, 522, 523, 524, 525, 526, 527, 528, 529, 618, 621, 622, 623, 701, 702) gegenüber dem mindestens einen Referenzsignal (115, 226, 227, 228, 229) vertikal verschoben wird und/oder Signalflanken des jeweiligen Trägersignals (311, 418, 428, 429, 702) konvex gewölbt werden und/oder Signalflanken des jeweiligen Trägersignals (312, 418, 427, 701, 703) konkav gewölbt werden.

2. Verfahren nach Anspruch 1, wobei das jeweilige Trägersignal (116, 123, 124, 125, 141, 221, 222, 223, 224, 225, 310, 421, 422, 423) mit einem Sägezahnverlauf gebildet wird.

3. Verfahren nach einem der voranstehenden Ansprüche, wobei eine jeweilige Nulllage mindestens eines Trägersignals (121, 133, 142, 151, 153) um einen jeweiligen Nulllage-Verschiebungswert (126, 136, 156, 157) vertikal nach oben verschoben wird, wobei gleichzeitig eine jeweilige Nulllage mindestens eines weiteren Trägersignals (122, 123, 124, 125, 132, 134, 135, 152, 154, 155) vertikal um einen jeweiligen Nulllage-Verschiebungswert (127, 137, 150, 158, 159) nach unten verschoben wird, und wobei die jeweiligen Nulllage-Verschiebungswerte (126, 127, 136, 137, 150, 156, 157, 158, 159) dergestalt gewählt werden, dass eine Summe über alle Nulllage-Verschiebungswerte (126, 127, 136, 137, 150, 156, 157, 158, 159) einen Wert Null ergibt.

4. Verfahren nach einem der voranstehenden Ansprüche, wobei mindestens ein Referenzsignal (115) einem jeweiligen Modul zugeordnet wird und um einen jeweiligen Referenzsignal-Verschiebungswert (226, 227) vertikal nach oben verschoben wird, wobei gleichzeitig mindestens ein weiteres Referenzsignal (115) einem weiteren Modul zugeordnet wird und um einen jeweiligen Referenzsignal-Verschiebungswert (228, 229) vertikal nach unten verschoben wird, und wobei die jeweiligen Referenzsignal-Verschiebungswerte (217, 226, 227, 228, 229) dergestalt gewählt werden, dass eine Summe über alle Referenzsignal-Verschiebungswerte (217, 226, 227, 228, 229) einen Wert Null ergibt.

5. Verfahren nach einem der voranstehenden Ansprüche, wobei Signalflanken mindestens eines Trägersignals (311, 312, 418, 427, 428, 429, 701, 702, 703) verformt werden, wobei wahlweise eine jeweilige Signalflanke konvex gewölbt wird, wodurch ein Strombeitrag eines jeweiligen von dem mindestens einen Trägersignal (311, 418, 428, 429, 702) gesteuerten Moduls abgesenkt wird, und wobei wahlweise eine jeweilige Signalflanke konkav gewölbt wird, wodurch ein Strombeitrag eines jeweiligen von dem mindestens einen Trägersignal (312, 418, 427, 701, 703) gesteuerten Moduls vergrößert wird, und wobei die jeweilige konvexe oder konkave Wölbung (301, 302) entsprechend dem Laststrom gewählt wird.

6. Verfahren nach einem der voranstehenden Ansprüche, wobei Signalflanken mindestens eines Trägersignals (428, 429, 702) um einen jeweiligen positiven Wölbungswert (425, 426, 742) konvex gewölbt werden, wobei gleichzeitig Signalflanken mindestens eines weiteren Trägersignals (427, 701, 703) um einen Betrag eines jeweiligen negativen Wölbungswertes (424, 741, 743) konkav gewölbt werden, und wobei die jeweiligen Wölbungswerte (424, 425, 426, 741, 742, 743) dergestalt gewählt werden, dass eine Summe über alle Wölbungswerte (424, 425, 426, 741, 742, 743) einen Wert Null ergibt, wodurch eine Verteilung von Scheinwiderstandswerten der Module um einen Mittelwert kompensiert wird.

7. Verfahren nach einem der voranstehenden Ansprüche, wobei zusätzlich mindestens ein Trägersignal mit mindestens einem weiteren Trägersignal überlagert wird, so dass Multifrequenz-Trägersignale (521, 522, 523, 524, 525, 526, 527, 528, 529) gebildet werden.

8. Verfahren nach einem der voranstehenden Ansprüche, wobei eine jeweilige Amplitude mindestens einen Trägersignals (621, 622, 623, 701, 702, 703) um einen jeweiligen Skalierungswert (624, 625, 626, 761, 762, 763) skaliert wird, wobei gleichzeitig eine jeweilige Amplitude mindestens eines weiteren Trägersignals (621, 622, 623, 701, 702, 703) um einen jeweiligen weiteren Skalierungswert (624, 625, 626, 761, 762, 763) skaliert wird, und wobei die jeweiligen Skalierungswerte (624, 625, 626, 761, 762, 763) dergestalt gewählt werden, dass eine Summe über alle inversen Skalierungswerte (624, 625, 626, 761, 762, 763) konstant gehalten wird.

9. Steuergerät für einen modularen Multilevelkonverter, wobei der modulare Multilevelkonverter eine Vielzahl von Modulen mit mindestens einer Energiespeichereinheit und einer Mehrzahl steuerbarer Schalter umfasst, wobei das Steuergerät (101, 201, 401, 501, 601) dazu konfiguriert ist, den modularen Multilevelkonverter mittels pulsweitenmodulierter Steuersignale (119) anzusteuern, ein jeweiliges Steuersignal (119) basierend auf einem jeweiligen Trägersignal (116, 118, 121, 122, 123, 124, 125, 131, 132, 133, 134, 135, 141, 142, 151, 152, 153, 154, 155, 221, 222, 223, 224, 225, 310, 421, 422, 423, 518, 521, 522, 523, 524, 525, 526, 527, 528, 529, 618, 621, 622, 623, 701, 702, 703), welches eine auf das jeweilige Modul bezogene Phasenverschiebung aufweist, und basierend auf mindestens einem Referenzsignal (115, 226, 227, 228, 229) zu erzeugen, durch einen auf einem Größenvergleich basierenden Vergleich eines Signalverlaufs des jeweiligen Trägersignals (116, 118, 121, 122, 123, 124, 125, 131, 132, 133, 134, 135, 141, 142, 151, 152, 153, 154, 155, 221, 222, 223, 224, 225, 310, 421, 422, 423, 518, 521, 522, 523, 524, 525, 526, 527, 528, 529, 618, 621, 622, 623, 701, 702, 703) mit dem mindestens einen Referenzsignal (115, 226, 227, 228, 229) eine Zuschaltzeit (143, 144, 233, 234) der mindestens einen Energiespeichereinheit des jeweiligen Moduls zu einem Laststrom zu triggern, und den Signalverlauf (102, 103, 104, 105, 202, 203, 300, 402, 502, 602, 700) des jeweiligen Trägersignals (116, 123, 124, 125, 141, 221, 222, 223, 224, 225, 310, 421, 422, 423) durch mindestens eine Veränderung (117, 217, 417, 517, 617) innerhalb folgender drei Freiheitsgrade zu modifizieren, nämlich indem das jeweilige Trägersignal (118, 121, 122, 131, 132, 133, 134, 135, 142, 151, 152, 153, 154, 155, 518, 521, 522, 523, 524, 525, 526, 527, 528, 529, 618, 621, 622, 623, 701, 702) gegenüber dem mindestens einen Referenzsignal (115, 226, 227, 228, 229) vertikal verschoben wird und/oder Signalflanken des jeweiligen Trägersignals (311, 418, 428, 429, 702) konvex gewölbt werden und/oder Signalflanken des jeweiligen Trägersignals (312, 418, 427, 701, 703) konkav gewölbt werden, wobei insbesondere das Steuergerät weiter dazu konfiguriert ist, ein Verfahren nach einem der Ansprüche 2 bis 8 auszuführen.

10. Modularer Multilevelkonverter, welcher ein Steuergerät (101, 201, 401, 501, 601) nach Anspruch 9 aufweist und auf dem ein Verfahren nach einem der Ansprüche 1 bis 8 ausführbar ist.

**Geänderte Patentansprüche gemäss Regel 137(2) EPÜ.**

1. Verfahren zu einer Ansteuerung eines modularen Multilevelkonverters, wobei der modulare Multilevelkonverter eine Vielzahl von Modulen mit mindestens einer Energiespeichereinheit und einer Mehrzahl steuerbarer Schalter umfasst, wobei der modulare Multilevelkonverter mittels pulsweitenmodulierter Steuersignale (119) angesteuert wird, wobei ein jeweiliges Steuersignal (119) basierend auf einem jeweiligen sinusförmigen Trägersignal (116, 118, 121, 122, 123, 124, 125, 131, 132, 133, 134, 135, 141, 142, 151, 152, 153, 154, 155, 221, 222, 223, 224, 225, 310, 421, 422, 423, 518, 521, 522, 523, 524, 525, 526, 527, 528, 529, 618, 621, 622, 623, 701, 702, 703), welches eine auf das jeweilige Modul bezogene Phasenverschiebung aufweist, und basierend auf mindestens einem Referenzsignal (115, 226, 227, 228, 229) erzeugt wird, wobei durch einen auf einem Größenvergleich basierenden Vergleich eines Signalverlaufs des jeweiligen Trägersignals (116, 118, 121, 122, 123, 124, 125, 131, 132, 133, 134, 135, 141, 142, 151, 152, 153, 154, 155, 221, 222, 223, 224, 225, 310, 421, 422, 423, 518, 521, 522, 523, 524, 525, 526, 527, 528, 529, 618, 621, 622, 623, 701, 702, 703) mit dem mindestens einen Referenzsignal (115, 226, 227, 228, 229) eine Zuschaltzeit (143, 144, 233, 234) der mindestens einen Energiespeichereinheit des jeweiligen Moduls zu einem Laststrom getriggert wird, und wobei der Signalverlauf (102, 103, 104, 105, 202, 203, 300, 402, 502, 602, 700) des jeweiligen Trägersignals (116, 123, 124, 125, 141, 221, 222, 223, 224, 225, 310, 421, 422, 423) durch mindestens eine Veränderung (117, 217, 417, 517, 617) innerhalb folgender drei Freiheitsgrade modifiziert wird, nämlich indem das jeweilige Trägersignal (118, 121, 122, 131, 132, 133, 134, 135, 142, 151, 152, 153, 154, 155, 518, 521, 522, 523, 524, 525, 526, 527, 528, 529, 618, 621, 622, 623, 701, 702) gegenüber dem mindestens einen Referenzsignal (115, 226, 227, 228, 229) vertikal verschoben wird und/oder Signalflanken des jeweiligen Trägersignals (311, 418, 428, 429, 702) konvex gewölbt werden und/oder Signalflanken des jeweiligen Trägersignals (312, 418, 427, 701, 703) konkav gewölbt werden, wobei durch die Modifikation des jeweiligen Trägersignals (116, 118, 121, 122, 123, 124, 125, 131, 132, 133, 134, 135, 141, 142, 151, 152, 153, 154, 155, 221, 222, 223, 224, 225, 310, 421, 422, 423, 518, 521, 522, 523, 524, 525, 526, 527, 528, 529, 618, 621, 622, 623, 701, 702, 703) ein Laden oder ein Entladen der Energiespeichereinheiten aller Module aktiv kontrolliert wird und ein jeweiliger Ladungsausgleich zwischen den Energiespeichereinheiten gesteuert wird.

2. Verfahren nach einem der voranstehenden Ansprüche, wobei eine jeweilige Nulllage mindestens eines Trägersignals (121, 133, 142, 151, 153) um einen jeweiligen Nulllage-Verschiebungswert (126, 136, 156, 157) vertikal nach oben verschoben wird, wobei gleichzeitig eine jeweilige Nulllage mindestens eines weiteren Trägersignals (122, 123, 124, 125, 132, 134, 135, 152, 154, 155) vertikal um einen jeweiligen Nulllage-Verschiebungswert (127, 137, 150, 158, 159) nach unten verschoben wird, und wobei die jeweiligen Nulllage-Verschiebungswerte (126, 127, 136, 137, 150, 156, 157, 158, 159) dergestalt gewählt werden, dass eine Summe über alle Nulllage-Verschiebungswerte (126, 127, 136, 137, 150, 156, 157, 158, 159) einen Wert Null ergibt.

3. Verfahren nach einem der voranstehenden Ansprüche, wobei mindestens ein Referenzsignal (115) einem jeweiligen Modul zugeordnet wird und um einen jeweiligen Referenzsignal-Verschiebungswert (226, 227) vertikal nach oben verschoben wird, wobei gleichzeitig mindestens ein weiteres Referenzsignal (115) einem weiteren Modul zugeordnet wird und um einen jeweiligen Referenzsignal-Verschiebungswert (228, 229) vertikal nach unten verschoben wird, und wobei die jeweiligen Referenzsignal-Verschiebungswerte (217, 226, 227, 228, 229) dergestalt gewählt werden, dass eine Summe über alle Referenzsignal-Verschiebungswerte (217, 226, 227, 228, 229) einen Wert Null ergibt.

4. Verfahren nach einem der voranstehenden Ansprüche, wobei Signalflanken mindestens eines Trägersignals (311, 312, 418, 427, 428, 429, 701, 702, 703) verformt werden, wobei wahlweise eine jeweilige Signalflanke konvex gewölbt wird, wodurch ein Strombeitrag eines jeweiligen von dem mindestens einen Trägersignal (311, 418, 428, 429, 702) gesteuerten Moduls abgesenkt wird, und wobei wahlweise eine jeweilige Signalflanke konkav gewölbt wird, wodurch ein Strombeitrag eines jeweiligen von dem mindestens einen Trägersignal (312, 418, 427, 701, 703) gesteuerten Moduls vergrößert wird, und wobei die jeweilige konvexe oder konkave Wölbung (301, 302) entsprechend dem Laststrom gewählt wird.

5. Verfahren nach einem der voranstehenden Ansprüche, wobei Signalflanken mindestens eines Trägersignals (428, 429, 702) um einen jeweiligen positiven Wölbungswert (425, 426, 742) konvex gewölbt werden, wobei gleichzeitig Signalflanken mindestens eines weiteren Trägersignals (427, 701, 703) um einen Betrag eines jeweiligen negativen Wölbungswertes (424, 741, 743) konkav gewölbt werden, und wobei die jeweiligen Wölbungswerte (424, 425, 426, 741, 742, 743) dergestalt gewählt werden, dass eine Summe über alle Wölbungswerte (424, 425, 426, 741, 742, 743) einen Wert Null ergibt, wodurch eine Verteilung von Scheinwiderstandswerten der Module um einen Mittelwert kompensiert wird.

6. Verfahren nach einem der voranstehenden Ansprüche, wobei zusätzlich mindestens ein Trägersignal mit mindestens einem weiteren Trägersignal überlagert wird, so dass Multifrequenz-Trägersignale (521, 522, 523, 524, 525, 526, 527, 528, 529) gebildet werden.

7. Verfahren nach einem der voranstehenden Ansprüche, wobei eine jeweilige Amplitude mindestens einen Trägersignals (621, 622, 623, 701, 702, 703) um einen jeweiligen Skalierungswert (624, 625, 626, 761, 762, 763) skaliert wird, wobei gleichzeitig eine jeweilige Amplitude mindestens eines weiteren Trägersignals (621, 622, 623, 701, 702, 703) um einen jeweiligen weiteren Skalierungswert (624, 625, 626, 761, 762, 763) skaliert wird, und wobei die jeweiligen Skalierungswerte (624, 625, 626, 761, 762, 763) dergestalt gewählt werden, dass eine Summe über alle inversen Skalierungswerte (624, 625, 626, 761, 762, 763) konstant gehalten wird.

8. Steuergerät für einen modularen Multilevelkonverter, wobei der modulare Multilevelkonverter eine Vielzahl von Modulen mit mindestens einer Energiespeichereinheit und einer Mehrzahl steuerbarer Schalter umfasst, wobei das Steuergerät (101, 201, 401, 501, 601) dazu konfiguriert ist, den modularen Multilevelkonverter mittels pulsweitenmodulierter Steuersignale (119) anzusteuern, ein jeweiliges Steuersignal (119) basierend auf einem jeweiligen sinusförmigen Trägersignal (116, 118, 121, 122, 123, 124, 125, 131, 132, 133, 134, 135, 141, 142, 151, 152, 153, 154, 155, 221, 222, 223, 224, 225, 310, 421, 422, 423, 518, 521, 522, 523, 524, 525, 526, 527, 528, 529, 618, 621, 622, 623, 701, 702, 703), welches eine auf das jeweilige Modul bezogene Phasenverschiebung aufweist, und basierend auf mindestens einem Referenzsignal (115, 226, 227, 228, 229) zu erzeugen, durch einen auf einem Größenvergleich basierenden Vergleich eines Signalverlaufs des jeweiligen Trägersignals (116, 118, 121, 122, 123, 124, 125, 131, 132, 133, 134, 135, 141, 142, 151, 152, 153, 154, 155, 221, 222, 223, 224, 225, 310, 421, 422, 423, 518, 521, 522, 523, 524, 525, 526, 527, 528, 529, 618, 621, 622, 623, 701, 702, 703) mit dem mindestens einen Referenzsignal (115, 226, 227, 228, 229) eine Zuschaltzeit (143, 144, 233, 234) der mindestens einen Energiespeichereinheit des jeweiligen Moduls zu einem Laststrom zu triggern, den Signalverlauf (102, 103, 104, 105, 202, 203, 300, 402, 502, 602, 700) des jeweiligen Trägersignals (116, 123, 124, 125, 141, 221, 222, 223, 224, 225, 310, 421, 422, 423) durch mindestens eine Veränderung (117, 217, 417, 517, 617) innerhalb folgender drei Freiheitsgrade zu modifizieren, nämlich indem das jeweilige Trägersignal (118, 121, 122, 131, 132, 133, 134, 135, 142, 151, 152, 153, 154, 155, 518, 521, 522, 523, 524, 525, 526, 527, 528, 529, 618, 621, 622, 623, 701, 702) gegenüber dem mindestens einen Referenzsignal (115, 226, 227, 228, 229) vertikal verschoben wird und/oder Signalflanken des jeweiligen Trägersignals (311, 418, 428, 429, 702) konvex gewölbt werden und/oder Signalflanken des jeweiligen Trägersignals (312, 418, 427, 701, 703) konkav gewölbt werden, und durch die Modifikation des jeweiligen Trägersignals (116, 118, 121, 122, 123, 124, 125, 131, 132, 133, 134, 135, 141, 142, 151, 152, 153, 154, 155, 221, 222, 223, 224, 225, 310, 421, 422, 423, 518, 521, 522, 523, 524, 525, 526, 527, 528, 529, 618, 621, 622, 623, 701, 702, 703) ein Laden oder ein Entladen der Energiespeichereinheiten aller Module aktiv zu kontrollieren und einen jeweiligen Ladungsausgleich zwischen den Energiespeichereinheiten zu steuern, wobei insbesondere das Steuergerät weiter dazu konfiguriert ist, ein Verfahren nach einem der Ansprüche 2 bis 8 auszuführen.

9. Modularer Multilevelkonverter, welcher ein Steuergerät (101, 201, 401, 501, 601) nach Anspruch 8 aufweist und auf dem ein Verfahren nach einem der Ansprüche 1 bis 7 ausführbar ist.

Fig. 1a

Fig. 1b

**Fig. 1c**

$\delta_1^+$, 156    $\delta_3^+$, 157    $\delta_2^-$, 158    $\delta_5^-$, 159    $\delta_4^-$, 150

**Fig. 1d**

201

111    115    215    114    119

112    116

110    113    217

Fig. 2a

**Fig. 2b**

Fig. 3

Fig. 4a

Fig. 4b

Fig. 5a

Fig. 5b

Fig. 6a

Fig. 6b

Fig. 7

**EUROPÄISCHER RECHERCHENBERICHT**

Nummer der Anmeldung

EP 22 02 0200

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TASHAKOR NIMA ET AL: "Modular Multilevel Converter With Sensorless Diode-Clamped Balancing Through Level-Adjusted Phase-Shifted Modulation", IEEE TRANSACTIONS ON POWER ELECTRONICS, INSTITUTE OF ELECTRICAL AND ELECTRONICS ENGINEERS, USA, Bd. 36, Nr. 7, 1. Dezember 2020 (2020-12-01), Seiten 7725-7735, XP011843125, ISSN: 0885-8993, DOI: 10.1109/TPEL.2020.3041599 [gefunden am 2021-03-04] * Zusammenfassung; Abbildungen 1,2,4,5 * * Kapitel II, B. * ----- | 1-10 | INV. H02M7/483 H02M7/49 H02M7/5395 H02M1/00 |
| A | SAMIR KOURO ET AL: "Multicarrier PWM With DC-Link Ripple Feedforward for Multilevel Inverters", 12TH INTERNATIONAL POWER ELECTRONICS AND MOTION CONTROL CONFERENCE, IEEE, PI, 1. August 2006 (2006-08-01), Seiten 234-239, XP031008920, ISBN: 978-1-4244-0120-8 * Abbildung 4 * ----- | 8 | RECHERCHIERTE SACHGEBIETE (IPC) H02M |
| A | LUCAS SINOPOLI ET AL: "Introducing the elliptical carrier for PWM inverters: Derivation and properties for phase-shift compensation", ENERGY CONVERSION CONGRESS AND EXPOSITION (ECCE), 2011 IEEE, IEEE, 17. September 2011 (2011-09-17), Seiten 3714-3719, XP032067665, DOI: 10.1109/ECCE.2011.6064273 ISBN: 978-1-4577-0542-7 * Abbildungen 2,5 * ----- | 1-10 | |

-/--

Der vorliegende Recherchenbericht wurde für alle Patentansprüche erstellt

| Recherchenort | Abschlußdatum der Recherche | Prüfer |
|---|---|---|
| Den Haag | 7. Oktober 2022 | Kail, Maximilian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

**EUROPÄISCHER RECHERCHENBERICHT**

Nummer der Anmeldung

**EP 22 02 0200**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | GHIAS AMER M Y M ET AL: "On Reducing Power Losses in Stack Multicell Converters with Optimal Voltage Balancing Method", IEEE TRANSACTIONS ON POWER ELECTRONICS, INSTITUTE OF ELECTRICAL AND ELECTRONICS ENGINEERS, USA, Bd. 30, Nr. 9, 1. September 2015 (2015-09-01), Seiten 4682-4695, XP011578608, ISSN: 0885-8993, DOI: 10.1109/TPEL.2014.2364523 [gefunden am 2015-04-15] * Abbildung 2 * ----- | 2 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| **Den Haag** | **7. Oktober 2022** | **Kail, Maximilian** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013201538 A1
- US 20120326507 A1
- EP 3694099 A1